# EUROPÄISCHE PATENTSCHRIFT

(11) **EP 2 134 976 B1**
(45) Veröffentlichungstag und Bekanntmachung des Hinweises auf die Patenterteilung: **16.03.2011**
(21) Anmeldenummer: 08700280.4
(22) Anmeldetag: 17.01.2008
(51) Int. Cl.: F16B 13/14, F16B 31/02

(54) **ANKER UND ANKERMUTTER FÜR DIESEN**
ANCHOR AND ANCHOR NUT THEREOF
BOULON D'ANCRAGE ET ÉCROU POUR LEDIT BOULON D'ANCRAGE

(30) Priorität: 12.03.2007 AT 3912007
(43) Veröffentlichungstag der Anmeldung: 23.12.2009
(73) Patentinhaber: Atlas Copco Mai GmbH, 9710 Feistritz/Drau (AT)
(72) Erfinder: MEIDL, Michael, A-9871 Seeboden (AT)
(74) Vertreter: Beer, Manfred
(86) Internationale Anmeldenummer: PCT/AT2008/000013
(87) Internationale Veröffentlichungsnummer: WO 2008/109895

(56) Entgegenhaltungen:
- FR-A- 2 159 758
- GB-A- 2 158 538
- US-A- 3 979 918
- US-A- 4 662 795
- US-A1- 2001 026 746

## Beschreibung

Die Erfindung betrifft einer Ankermutter mit den Merkmalen des einleitenden Teils von Anspruch 1 (US 2001/0026746 A). Insbesondere bezieht sich die Erfindung auf Anker deren Ankerstab beim Einbauen (Setzen) des Ankers gedreht werden muss, wie dies beispielsweise bei Klebeankern, durch Mörtel festgelegte Anker oder bei Spreizhülsenankern der Fall ist.

Beim Setzen von Klebeankern wird so vorgegangen, dass in den Untergrund, in den der Anker zu setzen ist, ein Loch gebohrt wird. Dann werden in das Bohrloch eine oder mehrere Patronen, die Klebstoff enthalten, eingebracht, indem sie entweder mit einem Ladestock in das Bohrloch geschoben oder mit Druckluft eingeschossen werden. Diese Patronen enthalten in der Regel Zwei-Komponenten-Klebstoffe, deren Komponenten in den Patronen voneinander räumlich getrennt in beispielsweise zueinander konzentrischen Kunststoffhüllen untergebracht sind. Nach dem Einbringen der wenigstens einen Patrone in das Bohrloch wird der Anker in das Bohrloch geschoben und in Drehung versetzt. Das Drehen des Ankers, also des Metallstabes, vorzugsweise eines Stahlstabes mit rauer Oberfläche oder mit profilierter Oberfläche (Torstähle, Gewindestäbe), kann mit Hilfe einer Bohrmaschine (Stützenbohrmaschine oder Bohrgerät) ausgeführt werden. Dabei soll das vordere Ende des Ankers die Patrone mit den Komponenten des Klebstoffes zerstören und die beiden Komponenten des Klebstoffes miteinander vermischen, sodass das Aushärten des Klebstoffes beginnt.

Die Reaktionszeit, also die Aushärtezeit des Klebstoffes, kann durch Wahl der Komponenten und deren Mischungsverhältnis beliebig von wenigen Sekunden bis mehrere Minuten eingestellt werden.

An Stelle von Klebstoff können die Patronen auch Mörtel enthalten, der, nachdem er ausgehärtet ist, den Anker im Bohrloch festlegt. Solche Mörtelpatronen sind poröse (Kunststoff-) Schläuche, die in Wasser eingelegt werden und dann wie die Klebstoffpatronen in das Bohrloch eingeführt werden.

Bekannt sind auch Anker, die im Bohrloch festgelegt werden, indem ein Teil des Ankerstabes oder ein mit dem Ankerstab verbundener Teil aufgeweitet (gespreizt) wird. Beispielsweise handelt es sich um Schlitzkeilanker, Gleitkeilanker oder Spreizhülsenanker. Zum Aufweiten wird ein Spreizkörper durch Drehen des Ankerstabes bewegt.

Problematisch bei diesen bekannten Ankern ist, dass für das

Drehen des Ankerstabes (dies kann ein voller Stab oder ein Rohr sein) an dessen aus dem Bohrloch herausragenden Ende Betätigungsmittel angesetzt werden müssen, die dann wieder zu entfernen sind, sobald der Anker im Bohrloch durch die Klebung, den Mörtel oder die Spreizung gehalten festsitzt.

Aus der US 2001/0026746 A ist ein Anker der eingangs genannten Gattung bekannt. Problematisch bei diesem Anker ist es, dass der gewindefreie Abschnitt in der Bohrung in der Ankermutter selbst angeordnet ist, weil so das Moment, das erforderlich ist die Ankermutter vollständig auf den Ankerstab zu schrauben, nicht oder nur durch Ändern der Ankermutter selbst auf den jeweils erforderlichen Wert eingestellt werden kann.

Eine Mutter, deren Bohrung einen Abschnitt mit Gewinde und einen Abschnitt ohne Gewinde aufweist, ist aus der DE 2474 C bekannt.

Der Erfindung liegt die Aufgabe zu Grunde, hier eine-Vereinfachung zu schaffen.

Gelöst wird diese Aufgabe erfindungsgemäß mit einem Anker, welcher die Merkmale von Anspruch 1 aufweist.

Bevorzugte und vorteilhafte Ausgestaltungen der Erfindung sind Gegenstand der Unteransprüche.

Da bei dem erfindungsgemäßen Anker die Ankermutter, die ohne-, dies am Anker anzubringen ist, zum Drehen des Ankerstabes zum Öffnen der Klebstoff- oder Mörtelpatrone oder zum Betätigen (achsialen Verstellen) des Spreizkörpers verwendet wird, ist eine erhebliche Vereinfachung getroffen, da es einfach genügt, die Mutter nach dem Festlegen des Ankerstabes weiter auf den Anker zu schrauben bis die Ankerplatte endgültig am Untergrund, in den der Anker gesetzt worden ist, anliegt.

Da bei der Erfindung der Bereich der Ankermutter ohne Gewinde bzw. mit kleinerem Innengewinde nicht in der Bohrung der Ankermutter selbst liegt, sondern in einem Ringwulst, kann durch Wahl der Abmessungen des Ringwulstes das Drehmoment, das erforderlich ist, die Mutter vollständig auf den Ankerstab zu schrauben, unabhängig von den Abmessungen der Ankermutter selbst gewählt werden.

Die Erfindung kann grundsätzlich bei allen Arten von (Gebirgs-) Ankern verwirklicht werden, bei denen der Ankerstab gedreht werden muss, um ihn im Bohrloch (durch Klebung, durch Mörtel, durch Spreizung u.ähnl.) festzulegen.

Weitere Einzelheiten und Merkmale der Erfindung ergeben sich aus der nachstehenden Beschreibung eines bevorzugten Ausführungsbeispieles an Hand der Zeichnungen.

Es zeigt: Fig. 1 eine Ankermutter in Seitenansicht, Fig. 2 eine Draufsicht hiezu, Fig. 3 die Situation beim Drehen des Anker(-Stabes) und Fig. 4 die endgültige Position des Ankers mit Ankerstab, Ankerplatte und Ankermutter.

Es ist an sich bekannter Stand der Technik, beim Setzen von Ankern, beispielsweise beim Setzen von Ankern der Gattung Klebeanker oder Mörtelanker, aber auch beim Spreizhülsenanker am äußeren Ende eines Ankerstabes 3, der über den Untergrund 7, in dem der Anker gesetzt ist, vorsteht, eine Ankerplatte 4 aufzuschieben und diese dann mit Hilfe einer Ankermutter 1 gegen den Untergrund 7 zu drücken.

Bei der Erfindung dient die Ankermutter 1 auch zum Drehen des Ankerstabes 3, wenn dieser dazu herangezogen wird, mit seinem vorderen, im Bohrloch 5 aufgenommenen Ende, eine Klebstoff- oder eine Mörtelpatrone, die am inneren Ende des Bohrlochs 5 angeordnet ist, zu öffnen, um den Klebstoff/Mörtel freizusetzen und zu mischen oder aber um einen am vorderen, im Bohrloch aufgenommenen Ende des Ankerstabes vorgesehenen Spreizkörper bei Schlitzkeilankern, Gleitkeilankern, Spreizhülsenankern und ähnlichen Ankern in Richtung des Ankerstabes zu verstellen, um das Spreizen zu bewirken.

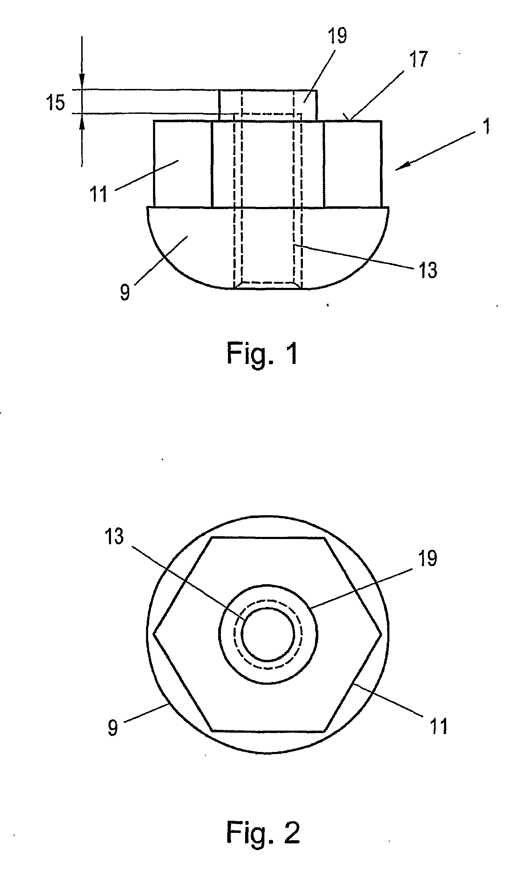

Die erfindungsgemäße Ankermutter 1, wie sie in den Fig. 1 und 2 gezeigt ist, besitzt einen etwa halbkugelförmigen, der Ankerplatte 4 zugekehrten Teil 9 und einen Mehrkant 11, z.B. einen Vier- oder Sechskant. Der halbkugelförmige Teil 9 der Ankermutter 1 ist aber nicht zwingend vorgesehen.

In der Ankermutter 1 ist eine Gewindebohrung 13 vorgesehen, wobei das Gewinde der Gewindebohrung 13 nur über einen Teil seiner Länge mit dem Außengewinde des Ankerstabes 3 korrespondiert. Insbesondere handelt es sich bei diesen Gewinden um Rundgewinde. Es sind jedoch auch andere Gewindearten, wie metrische Gewinde usw., denkbar.

Das Gewinde in der Gewindebohrung 13 der Ankermutter 1 ist nicht durchgehend ausgebildet, sondern nur im Bereich der vorderen Seite der Ankermutter 1, also im Bereich des halbkugelförmigen Teils 9, ein "fertiges" Innengewinde, das dem Außengewinde am Ankerstab 3 entspricht. In dem Teil 9 der Ankermutter 1 gegenüberliegenden, hinteren Bereich 15 (die vordere Seite ist die Seite mit dem halbkugelförmigen Teil 9) ist das Innengewinde nicht vorgesehen oder nicht fertig. Dabei kann entweder in dem Bereich 15 überhaupt kein Gewinde geschnitten sein oder das Gewinde ist nur zum Teil geschnitten. Der nicht mit Gewinde versehene Bereich 15 oder der das nur teilweise geschnittene Gewinde aufweisende Bereich 15 kann in einem über die Außenfläche 17 der Ankermutter 1 vorstehenden Ansatz 19 vorgesehen sein.

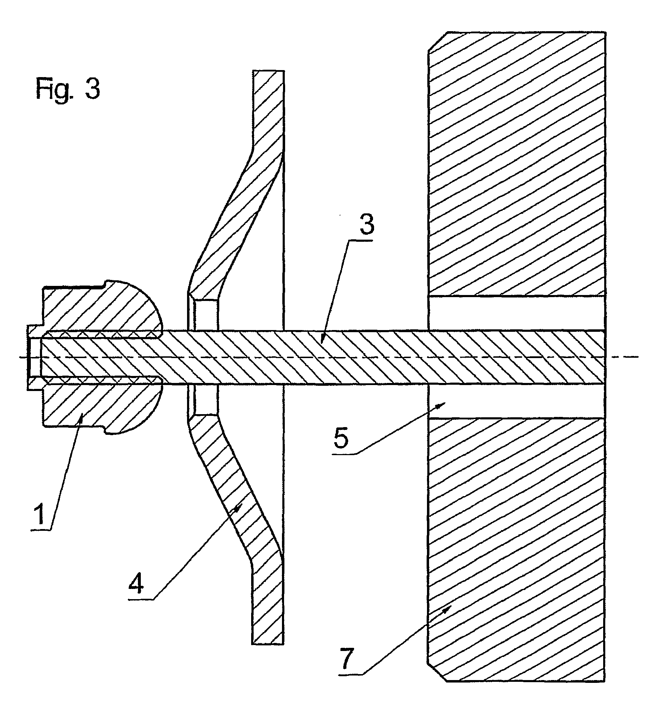

Bei Verwenden der erfindungsgemäßen Ankermutter 1 kann wie folgt vorgegangen werden:
Nachdem das Bohrloch 5 in den Untergrund 7 gebohrt und in das Bohrloch 5 eine oder mehrere Klebstoffpatronen oder die Mörtelpatronen (nicht gezeigt) eingeschoben und der Ankerstab 3 nachgeschoben worden ist, wird der Ankerstab 3 gedreht, um die Mörtelpatrone zu öffnen und den Mörtel zu mischen. Sinngemäßes gilt für das Öffnen einer Klebstoffpatrone und das Mischen des Klebstoffes, der in der Regel ein Zwei-Komponenten-Klebstoff ist. Da die Ankermutter 1 wegen der besonderen Ausbildung des Gewindes in ihr zunächst nur über einen Teil ihrer Länge auf den Ankerstab 3 geschraubt werden kann (siehe Fig. 3), kann der Ankerstab 3 mit Hilfe eines Werkzeuges, das auf den Sechskantbereich 11 der Ankermutter 1 angesetzt ist, gedreht werden, um das gewünschte Öffnen der Patrone und Mischen des Klebstoffes oder Mörtels oder das Verstellen des Spreizkörpers in Längsrichtung des Ankerstabes 3 zu erreichen.

Dabei kann die Ausgestaltung des Gewindes mit den beiden Abschnitten in der Gewindebohrung 13 der Ankermutter 1 so gewählt werden, dass die Ankermutter 1 bis zu einem vorgegebenen Drehmoment nicht weiter auf den Ankerstab 3 geschraubt wird. Beispielsweise ist dieses Drehmoment mit 80 Nm gewählt.

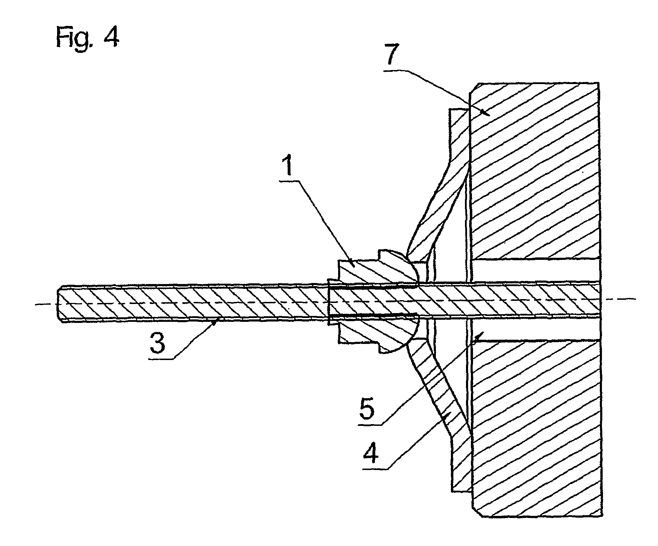

Sobald dieses Drehmoment überschritten wird, was der Fall ist, sobald der Klebstoff bzw. der Mörtel aushärtet oder das Spreizen erfolgt ist und den Ankerstab 3 festhält, wird bei fortgesetztem Drehen der Ankermutter 1 der nicht bzw. mit nicht fertigem Gewinde versehene Bereich 15 der Bohrung 13 in der Ankermutter 1 unter Verformen zu einem Gewinde umgeformt, sodass die Ankermutter 1 weiter auf den Ankerstab 3 geschraubt werden kann, bis die Ankerplatte 4 am Untergrund 7 anliegt, wie dies in Fig. 4 gezeigt ist. Das Aufschrauben der Ankermutter 1 auf das Außengewinde des Ankerstabes 3 über die Stellung gemäß Fig. 3 hinaus, kann mit dem Werkzeug, mit dem der Ankerstab 3 vorher über die Ankermutter 1 gedreht wurde, also ohne Wechsel des Werkzeuges, erfolgen.

Von Vorteil bei der Erfindung ist, dass das Innengewinde in der Ankermutter 1 nicht komplett fertig ist. Dabei steht der Ankerstab 3 mit seinem außerhalb des Bohrloches 5 liegendem Ende während des Einbaues des Ankers am nicht fertig hergestellten Bereich 15 des Gewindes in der Ankermutter 1 an (Fig. 3). Nach dem Aushärten des Klebstoffes oder Mörtels, mit welchem der Ankerstab 3 im Bohrloch fixiert wird oder nach erfolgtem Spreizen, wird der Ankerstab 3 auch in den nicht fertigen Bereich 15 des Gewindes der Ankermutter 1 geschraubt, wobei in der gezeigten Ausführungsform der Ansatz 19 an der vom gewölbten Teil 9 abgekehrten Fläche 17 der Ankermutter 1 durch Aufweiten verformt wird. Beispielsweise weitet der Ankerstab 3 den durchmesserjüngeren Teil des Gewindes in der Ankermutter 1 auf und arbeitet von sich aus das Gewinde in dem noch nicht fertigen Bereich 15 nach. Wenn in dem Bereich 15 der Gewindebohrung 13 zunächst kein Gewinde vorgesehen ist, wird beim Aufschrauben der Ankermutter 1 (mit erhöhtem Drehmoment) auf den im Bohrloch unverdrehbar festgelegten Ankerstab 3 auch im Bereich 15 ein Gewinde geformt, und die Ankermutter 1 bis in die in Fig. 4 gezeigte Stellung geschraubt.

Dies hat zur Folge, dass das Eindrehen eines kompletten Ankers (Stab, Platte und Mutter) in eine Klebstoff- (Kunstharz-) oder Mörtelpatrone und Vermischen des Klebstoffes (Kunstharzes) bzw. des Mörtels oder das Drehen des Ankerstabes 3 zum Betätigen eines Spreizkörpers über die auf das äußere Ende des Ankerstabes 3 aufgeschraubte Ankermutter 1 erfolgen kann. Durch Aushärten des Klebstoffes/Mörtels (bei Klebstoff innerhalb von wenigen Sekunden nach dem Durchmischen) bzw. durch das Spreizen wird der Ankerstab 3 im Bohrloch festgelegt, sodass sich jetzt die Ankermutter 1 gegenüber dem Ankerstab 3 weiter dreht, wobei der Ankerstab 3 in der Ankermutter 1 das Gewinde schneidet oder "fertigstellt" und dann die Ankerplatte 4 mit der Ankermutter 1 fixiert wird. So ist ein automatisierter Einbau möglich, ohne dass gesonderte Werkzeuge erforderlich sind, um den Ankerstab 3 zu drehen.

Zusammenfassend kann ein Ausführungsbeispiel der Erfindung wie folgt beschrieben werden:
Ein Anker besitzt einen Ankerstab 3, der beim Setzen des Ankers gedreht werden muss, eine Ankerplatte 4 und eine Ankermutter 1. Das Gewinde in der Ankermutter 1 ist nur über einen Teil der Gewindebohrung 13 an das Gewinde des Ankerstabes 3 angepasst. So kann die Ankermutter 1 nur ein Stück weiter auf den Ankerstab 3 geschraubt und bis zu einem bestimmten Drehmoment zum Drehen des Ankerstabes beim Setzen des Ankers verwendet werden. Sobald der Ankerstab 3 im Bohrloch durch Klebung, Mörtel oder Spreizung festsitzt, formt der Ankerstab 3 in der Gewindebohrung 13 ein durchgehendes Gewinde, wenn die Ankermutter 1 gegenüber dem Ankerstab 3 gedreht wird, sodass die Ankermutter 1 schließlich soweit auf den Ankerstab 3 geschraubt werden kann, dass sie die Ankerplatte 4 in ihrer endgültigen Position am Untergrund 7 festlegt.

## Patentansprüche

1. Ankermutter (1) mit einer Bohrung (13) mit Innengewinde, wobei in der Bohrung (13) das Innengewinde nur über einen Teil der Länge der Bohrung (13) vorgesehen ist und wobei in der Bohrung (13) ein gewindefreier Bereich (15) oder ein Bereich (15) vorliegt, in dem ein Innengewinde mit verringertem Durchmesser vorgesehen ist, **dadurch gekennzeichnet, dass** der gewindefreie Bereich (15) bzw. der Bereich (15) des Gewindes mit verringertem Durchmesser im Bereich eines von einer Stirnfläche (17) der Ankermutter (1) abstehenden Ringwulstes (19) vorgesehen ist.

2. Ankermutter nach Anspruch 1, **dadurch gekennzeichnet, dass** die Ringwulsts (19) auf der Stirnfläche (17) der Ankermutter (1) vorgesehen ist, die einem etwa halbkugelförmig gewölbten Teil (9) der Ankermutter (1) gegenüberliegt.

3. Anker mit einem Ankerstab (3), einer Ankerplatte (4) und einer Ankermutter (1) nach Anspruch 1, in welcher eine Innengewindebohrung (13) vorgesehen ist, deren Gewinde mit dem Außengewinde des Ankerstabes (3) korrespondiert, wobei die Innengewindebohrung (13) in der Ankermutter (1) nur über einen Teil ihrer Länge mit einem dem Außengewinde des Ankerstabes (3) korrespondierenden Innengewinde versehen ist und wobei über einen Bereich (15) der Länge der Gewindebohrung (13) in der Ankermutter (1) kein Gewinde oder ein Gewinde vorgesehen ist, das mit kleinerem Durchmesser ausgebildet ist als in dem Teil, in dem das Innengewinde mit dem Außengewinde des Ankerstabes (3) korrespondiert.

4. Anker nach Anspruch 3, **dadurch gekennzeichnet, dass** der ohne Gewinde oder mit Gewinde mit geringerem Durchmesser versehene Bereich (15) der Gewindebohrung (13) in der Ankermutter (1) an deren einem halbkugelförmig gewölbten Teil (9) der Ankermutter (1) gegenüberliegenden Ende vorgesehen ist.

5. Anker nach Anspruch 3 oder 4, **dadurch gekennzeichnet, dass** der innere Durchmesser des gewindefreien Bereichs (15) gleich dem Innendurchmesser der Gewindebohrung (13) ist.

## Claims

1. Anchor nut (1) with a hole (13) comprising an internal screw thread, whereby in the hole (13) the internal screw thread is provided only over part of the length of the hole (13) and whereby in the hole (13) that is provided a region (15) without a screw thread or a region (15), in which an internal screw thread of a reduced diameter is provided, **characterised in that** the region (15) without a screw thread, and the region (15) of the screw thread of reduced diameter respectively is provided in the region of a ring (19) that is projecting from a face (17) of the anchor nut (1).

2. Anchor nut according to claim 1, **characterised in that** the ring (19) is provided on the face (17) of the anchor nut (1) opposite to an approximately hemispherical part (9) of the anchor nut (1).

3. Anchor comprising an anchor rod (3), an anchor plate (4) and an anchor nut (1) according to claim 1 in which an internal screw-thread hole (13) is provided, whose screw thread corresponds to the external screw thread of the anchor rod (3), wherein the internal screw-thread hole (13) in the anchor nut (1) is provided only over a region (15) of the length of the screw-thread hole (13) with an internal screw thread that corresponds to the external screw thread of the anchor rod (3), and wherein over a region (15) of the length of the screw-thread hole (13) in the anchor nut (1) no screw thread is provided or a screw thread is provided that comprises a smaller diameter than in the part in which the internal screw thread corresponds to the external screw thread of the anchor rod (3).

4. Anchor according to claim 3, **characterised in that** the region (15) of the screw-thread hole (13) which comprises no screw thread or a screw thread with a smaller diameter is provided in the anchor nut (1) on its end opposite to a hemispherical part (9) of said anchor nut (1).

5. Anchor according to claim 3 or 4, **characterised in that** the internal diameter of the thread-free region (15) equals the internal diameter of the screw-thread hole (13).

## Revendications

1. Ecrou d'ancrage (1) comprenant un perçage (13) avec un filetage intérieur, sachant que dans le perçage (13), le filetage intérieur est prévu uniquement sur une partie de la longueur du perçage (13) et sachant que dans le perçage (13), une partie sans filetage (15) ou une partie (15) est présente dans laquelle un filetage intérieur au diamètre plus petit est prévu, **caractérisé en ce que** la partie sans filetage (15) respectivement la partie (15) du filetage au diamètre plus petit est prévue au niveau d'un boudin annulaire (19) faisant saillie d'une face avant (17) de l'écrou d'ancrage (1).

2. Ecrou d'ancrage (1) selon la revendication 1, **caractérisé en ce que** le boudin annulaire (19) est prévu sur la face avant (17) de l'écrou d'ancrage (1), opposée à une partie bombée semi-sphérique (9) de l'écrou d'ancrage (1).

3. Boulon d'ancrage comprenant une tige d'ancrage (3), un plateau d'ancrage (4) et un écrou d'ancrage (1) selon la revendication 1, dans lequel un perçage à filetage intérieur (13) est prévu, dont le filetage correspond au filetage extérieur de la tige d'ancrage (3), sachant que le perçage à filetage intérieur (13) est prévu dans l'écrou d'ancrage (1) avec un filetage intérieur correspondant au filetage extérieur de la tige d'ancrage (3) uniquement sur une partie de sa longueur et sachant que sur une partie (15) de la longueur du perçage fileté (13) dans l'écrou d'ancrage (1), aucun filetage n'est prévu ou qu'un filetage est prévu qui est formé avec un diamètre plus petit que dans la partie dans laquelle le filetage intérieur correspond avec le filetage extérieur de la tige d'ancrage (3).

4. Boulon d'ancrage selon la revendication 3, **caractérisé en ce que** la partie (15) du perçage fileté (13) dans l'écrou d'ancrage (1), sans filetage ou munie d'un filetage au diamètre plus petit, est prévue sur l'extrémité opposée à la partie bombée semi-sphérique (9) de l'écrou d'ancrage (1).

5. Boulon d'ancrage selon la revendication 3 ou 4, **caractérisé en ce que** le diamètre intérieur de la partie (15) sans filetage est égal au diamètre intérieur du perçage fileté (13)
